Europäisches Patentamt

European Patent Office

Office européen des brevets

(19)

(11) **EP 0 875 032 B1**

(12) **FASCICULE DE BREVET EUROPEEN**

(45) Date de publication et mention
de la délivrance du brevet:
**03.05.2000 Bulletin 2000/18**

(21) Numéro de dépôt: **97947072.1**

(22) Date de dépôt: **17.11.1997**

(51) Int Cl.7: **G06F 15/80**

(86) Numéro de dépôt international:
**PCT/FR97/02060**

(87) Numéro de publication internationale:
**WO 98/22883 (28.05.1998 Gazette 1998/21)**

(54) **PROCEDE D'APPRENTISSAGE GENERANT DES RESEAUX DE NEURONES DE PETITES TAILLES POUR LA CLASSIFICATION DE DONNEES**

LERNVERFAHREN DAS FÜR DATENKLASSIFIZIERUNG KLEINE NEURONALE NETZE GENERIERT

LEARNING METHOD GENERATING SMALL SIZE NEURONS FOR DATA CLASSIFICATION

(84) Etats contractants désignés:
**DE GB**

(30) Priorité: **18.11.1996 FR 9614022**

(43) Date de publication de la demande:
**04.11.1998 Bulletin 1998/45**

(73) Titulaires:
- **COMMISSARIAT A L'ENERGIE ATOMIQUE**
**75015 Paris (FR)**
- **CENTRE NATIONAL DE**
**LA RECHERCHE SCIENTIFIQUE**
**75794 Paris Cédex 16 (FR)**

(72) Inventeur: **GORDON, Mirta, Beatriz**
**F-38000 Grenoble (FR)**

(74) Mandataire: **Des Termes, Monique et al**
**Société Brevatome**
**3, rue du Docteur Lancereaux**
**75008 Paris (FR)**

(56) Documents cités:
**EP-A- 0 602 717**

- **ZHANG B -T: "AN INCREMENTAL LEARNING ALGORITHM THAT OPTIMIZES NETWORK SIZE AND SAMPLE SIZE IN ONE TRAIL" INTERNATIONAL CONFERENCE ON NEURAL NETWORKS/ WORLD CONGRESS ON COMPUTATIONAL INTELLIGENCE, ORLANDO, JUNE 27 - 29, 1994, vol. 1, 27 juin 1994, INSTITUTE OF ELECTRICAL AND ELECTRONICS ENGINEERS, pages 215-220, XP000510407**
- **SETIONO R ET AL: "USE OF A QUASI-NEWTON METHOD IN A FEEDFORWARD NEURAL NETWORK CONSTRUCTION ALGORITHM" IEEE TRANSACTIONS ON NEURAL NETWORKS, vol. 6, no. 1, 1 janvier 1995, pages 273-277, XP000483025**
- **XIANGUI YU ET AL: "A NEW ALGORITHM FOR TRAINING MULTILAYER FEEDFORWARD NEURAL NETWORKS" PROCEEDINGS OF THE INTERNATIONAL SYMPOSIUM ON CIRCUITS AND SYSTEMS (ISCS), CHICAGO, MAY 3 - 6, 1993, vol. 4 OF 4, 3 mai 1993, INSTITUTE OF ELECTRICAL AND ELECTRONICS ENGINEERS, pages 2403-2406, XP000379695**
- **FLETCHER J ET AL: "CONSTRUCTIVELY LEARNING A NEAR-MINIMAL NEURAL NETWORK ARCHITECTURE" INTERNATIONAL CONFERENCE ON NEURAL NETWORKS/ WORLD CONGRESS ON COMPUTATIONAL INTELLIGENCE, ORLANDO, JUNE 27 - 29, 1994, vol. 1, 27 juin 1994, INSTITUTE OF ELECTRICAL AND ELECTRONICS ENGINEERS, pages 204-208, XP000510406**

## Description

Domaine technique

L'invention concerne un procédé d'apprentissage générant des réseaux de neurones destinés à la classification de données et construits suivant les besoins de la tâche à effectuer.

Cette invention trouve des applications dans les domaines exploitant les réseaux de neurones et, en particulier, pour le diagnostic médical, la reconnaissance de formes ou encore la classification d'objets, ou de données comme des spectres, des signaux, etc.

Etat de la technique

Les réseaux de neurones, ou réseaux neuronaux, sont des systèmes qui effectuent, sur des informations numériques, des calculs inspirés du comportement des neurones physiologiques. Un réseau neuronal doit donc apprendre à réaliser les tâches que l'on désire lui faire effectuer par la suite. Pour cela, on utilise une base d'exemples, ou base d'apprentissage, qui contient une série d'exemples connus utilisés pour apprendre au réseau de neurones à effectuer les tâches qu'il devra reproduire, par la suite, avec des informations inconnues.

Un réseau neuronal est composé d'un ensemble de neurones formels. Chaque neurone est une unité de calcul constituée d'au moins une entrée et une sortie correspondant à un état. A chaque instant, l'état de chaque neurone est communiqué aux autres neurones de l'ensemble. Les neurones sont, en effet, connectés les uns aux autres par des connexions qui ont chacune un poids synaptique.

Le niveau total d'activation du neurone est égal à la somme des états de ses neurones d'entrée, pondérés chacun par le poids synaptique de la connexion correspondante. A chaque instant, ce niveau d'activation est utilisé par le neurone pour mettre à jour sa sortie.

Le réseau neuronal peut être, en particulier, un réseau en couches ; dans ce cas, le réseau comporte une ou plusieurs couches de neurones connectées chacune à la couche précédente, la dernière étant la couche de sortie. Chaque configuration des entrées du réseau produit une représentation interne qui est utilisée par les couches suivantes pour, par exemple, classer l'état d'entrée.

Il existe actuellement plusieurs algorithmes d'apprentissage permettant d'effectuer une classification de données ou une reconnaissance de formes à partir de réseaux de neurones, comme cela est expliqué, par exemple, dans le document intitulé « Introduction to the theory of neural computation » de HERTZ, KROGH et PALMER, (1991), Adison-Wesley.

Classiquement, les algorithmes permettent de fixer les paramètres du réseau, à savoir les valeurs des poids des connexions, le nombre de neurones utilisés dans le réseau, etc., en utilisant un certain nombre d'exemples connus de données à classer. Ces exemples constituent la base d'apprentissage.

L'algorithme le plus couramment utilisé est l'algorithme de rétropropagation du gradient (appelé « backpropagation » en terme anglo-saxon). Un tel algorithme est décrit, par exemple, dans le document intitulé « A learning scheme for asymmetric threshold networks » - in Cognitiva, Y. LE CUN, CESTA-AFCET Ed., pages 559-604, (1985). Cet algorithme consiste à minimiser une fonction de coût, associée à la qualité de la sortie du réseau. Cependant, cet algorithme a besoin de neurones dont les états sont représentés par des nombres réels, même pour des problèmes typiquement binaires, comme le problème de la classification selon deux classes. La rétropropagation du gradient exige, de plus, que l'on introduise, à priori, le nombre de neurones à utiliser ; or, il n'existe aucun critère théorique pour guider le choix de l'homme du métier dans cette détermination du nombre de neurones nécessaires.

D'autres algorithmes, appelés algorithmes « constructivistes » ou « adaptatifs », proposent d'adapter le nombre de neurones, dans le réseau, en fonction de la tâche à réaliser. De plus, certains de ces algorithmes n'utilisent que des neurones binaires, comme cela est décrit par exemple dans le document intitulé « Learning in feed forward layered neural networks : the tiling algorithm », MEZARD et NADAL, J. PHYS. A22, pages 2 191-2 203, ainsi que dans le document intitulé « Learning by activating neurons : a new approach to learning in neural neetworks », RUJAN et MARCHAND, complex Systems 3, (1989), page 229. L'inconvénient majeur de ces algorithmes est que la règle d'apprentissage au niveau de chaque neurone du réseau n'est pas performante, ce qui se traduit par des réseaux trop grands pour la tâche à résoudre et qui généralisent de façon médiocre.

La performance d'un algorithme se mesure par la capacité de généralisation de l'algorithme, c'est-à-dire la capacité à prédire à quelle classe appartient une donnée qui n'est pas contenue dans la base d'apprentissage. Pratiquement, elle se mesure au moyen de « l'erreur de généralisation » qui est le pourcentage de données d'une base de test (comportant des exemples connus, mais indépendante de la base d'apprentissage) mal classées par le réseau dont les paramètres ont été déterminés par l'algorithme d'apprentissage.

Un algorithme d'apprentissage performant pour un neurone est décrit dans le document intitulé « Learning with temperature dependent algorithm » de GORDON et GREMPEL, Europhysics letters, n° 29, pages 257 à 262, Janvier 1995, ainsi que dans le document intitulé « Minimerror : perceptron learning rule that finds the optimal weights » de GORDON et BERCHIER, ESANN'93, Bruxelles, M. VERLEYEN Ed., pages 105-110. Ces documents décrivent un algorithme, appelé « Minimerror », qui permet d'apprendre des tâches de classification au moyen de neurones binaires. Cet algorithme a l'avantage d'avoir une convergence garantie et de bonnes performances numériques, c'est-à-dire une capacité de généralisation optimale.

Par ailleurs, cet algorithme Minimerror a été associé à une autre règle d'apprentissage de type constructiviste, appelée « Monoplane ». Cet algorithme Monoplane est décrit dans l'article intitulé « An evolutive architecture coupled with optimal perceptron learning for classification » de TORRES-MORENO, PERETTO et GORDON, dans Esann'95, European symposium on artificial neural networks, Bruxelles, Avril 1995, pages 365 à 370. Cet algorithme Monoplane combine l'algorithme Minimerror avec une méthode pour générer des représentations internes.

Cet algorithme Monoplane est de type incrémental, c'est-à-dire qu'il permet de construire un réseau de neurones à une couche cachée en ajoutant des neurones au fur et à mesure des besoins.

Il possède ainsi des performances supérieures à celles de tous les autres algorithmes, ce qui signifie que, pour une base d'exemples identique, utilisée par une série de différents algorithmes, cet algorithme Monoplane a montré des résultats meilleurs, c'est-à-dire une plus faible erreur de généralisation.

Cependant, ces algorithmes Minimerror et Monoplane utilisent des neurones à fonction d'activation sigmoïdale qui permettent de faire uniquement des séparations linéaires. Un réseau réalisé à partir de tels neurones ne peut donc qu'établir des frontières planes (constituées d'hyperplans) entre domaines de classes différentes. Aussi, lorsque les frontières entre les classes sont courbes, ces réseaux font une approximation linéaire par morceaux, d'où une certaine imprécision et une nécessité d'introduire beaucoup de neurones.

D'autres types d'algorithmes, au contraire, effectuent un pavage de l'espace avec des hypersphères qui sont représentées chacune par un neurone. Ces algorithmes, décrits par exemple dans COOPER, REILLY & ELBAUM (1988), Neural networks systems, an introduction for managers, decision-makers and strategists. NESTOR, Inc. Providence, RI 02906-USA, finissent, en général, avec un nombre très élevé de neurones, même lorsqu'ils comportent des opérations d'élagage. Ces algorithmes nécessitent donc trop de ressources, c'est-à-dire trop de neurones et de poids pour réaliser la tâche.

Exposé de l'invention

L'invention a justement pour but de remédier aux inconvénients des techniques proposées précédemment. A cette fin, elle propose un procédé d'apprentissage générant des réseaux de neurones de petites tailles construits suivant les besoins de la tâche à effectuer et présentant une généralisation performante. Ce procédé d'apprentissage est destiné au classement d'objets ou de données en deux classes séparées par des surfaces de séparation, soit quadratiques, soit linéaires et quadratiques.

De façon plus précise, l'invention concerne un procédé pour apprendre, à partir d'une base d'exemples constituée de données d'entrée connues et de cibles correspondant à la classe de chacune de ces données d'entrée, à classer des objets en deux classes distinctes séparées par au moins une surface séparatrice de type quadratique ou de type quadratique et linéaire, ce procédé consistant à générer un réseau de neurones de type binaire, comportant chacun des paramètres descriptifs de la surface séparatrice qu'ils déterminent, ce réseau de neurones comportant des entrées de réseau ainsi qu'une couche de neurones cachés connectés à ces entrées et à un neurone de sortie du réseau caractérisé en ce qu'il comporte :

A) une étape d'initialisation consistant en :

Aa) un choix du type du premier neurone qu'on connecte aux entrées ;
Ab) un apprentissage de la base d'exemples ($B_0$) par ce premier neurone, afin de déterminer les paramètres descriptifs d'une première surface séparatrice, relatifs à ce neurone ;
Ac) une détermination du nombre d'erreurs d'apprentissage :
Ad) si ce nombre d'erreurs est nul, l'apprentissage est terminé et le premier neurone choisi en Aa) devient le neurone de sortie du réseau ;
Ae) si ce nombre est non nul, les paramètres du premier neurone sont figés et ledit neurone devient le premier neurone (i=1) d'une couche de neurones cachés construite par :

B) une étape de construction de la couche cachée et de détermination du neurone de sortie du réseau comprenant :

B1) une adaptation de la couche de neurones cachés en fonction du classement à effectuer consistant à :

B1a) déterminer de nouvelles cibles pour la base d'exemples $B_0$ en fonction des erreurs d'apprentissage du dernier neurone i appris, les entrées de la base d'exemples $B_0$ complétées des nouvelles cibles constituant une nouvelle base d'exemples $B_i$ ;
B1b) incrémenter d'une unité le compteur de neurones cachés i, et connecter un nouveau neurone caché, i, d'un type choisi, sur les entrées du réseau et apprendre à classer la nouvelle base d'exemples ($B_i$) ;
B1c) figer les paramètres de ce nouveau neurone i, les états des neurones cachés correspondant à chaque donnée d'entrée de la base d'exemples $B_0$ constituant une représentation interne de cette donnée d'entrée ;

B2) une validation de la couche de neurones cachés et une détermination du neurone de sortie du réseau.

Selon un premier mode de réalisation de l'invention, les représentations internes des entrées de la base d'exemples constituent une base de représentations internes $B_{RI}(i)$ et l'étape B2) consiste à :

B2a) introduire un neurone de sortie de type linéaire, connecter ce neurone de sortie aux neurones cachés, apprendre à ce neurone de sortie la classification de la base de représentations internes $B_{RI}(i)$ et déterminer le nombre d'erreurs d'apprentissage du neurone de sortie :

B2b) si ce nombre est nul, considérer que le réseau est construit et comporte une couche de i neurones cachés ;

B2c) si ce nombre est non nul, considérer les erreurs d'apprentissage du neurone de sortie comme des erreurs du neurone précédent dans l'étape B1a), annihiler ce neurone de sortie et recommencer le traitement à partir de l'étape B1a) jusqu'à ce que le nombre d'erreurs du neurone de sortie soit nul.

Selon un deuxième mode de réalisation dans lequel les entrées du réseau sont binaires, le procédé comprend une étape B3) intermédiaire, effectuée entre les étapes B1) et B2) et consistant à :

B3a) déterminer le nombre d'erreurs d'apprentissage du neurone i :

B3b) si ce nombre est non nul, le traitement est réitéré à partir de l'étape B1) en considérant les erreurs de ce neurone comme des erreurs du neurone précédent pour créer la base d'apprentissage Bi ;

B3c) si ce nombre est nul, considérer la couche de neurones cachés, ainsi construite comme potentiellement acceptable et effectuer l'étape B2).

Selon un troisième mode de réalisation de l'invention, dans lequel les entrées du réseau sont binaires, les représentations internes des entrées de la base d'exemples constituent une base de représentations internes $B_{RI}(i)$ et l'étape B2), lorsqu'elle est réalisée après l'étape B3c) consiste à :

B2d) introduire un neurone de sortie appelé pseudo-neurone, connecter ce pseudo-neurone à tous les neurones cachés dont les paramètres sont figés, calculer la sortie de ce pseudo-neurone comme étant sensiblement le produit des états des neurones cachés ;

B2e) déterminer si le pseudo-neurone effectue un classement correct de tous les exemples de la base de représentations internes $B_{RI}(i)$ :

B2f) si c'est le cas, l'apprentissage est considéré comme terminé et le réseau construit comporte une couche de i neurones cachés ;

B2g) si ce n'est pas le cas, considérer les erreurs de classification du pseudo-neurone de sortie comme des erreurs du neurone précédent dans l'étape B1a, annihiler ce pseudo-neurone de sortie et recommencer le traitement à partir de l'étape B1a) jusqu'à ce que le nombre d'erreurs du pseudo-neurone de sortie soit nul.

Selon un mode de réalisation avantageux, le premier neurone choisi à l'étape Aa) peut être un neurone de type linéaire, les autres neurones étant non linéaires.

Selon un autre mode de réalisation avantageux, tous les neurones cachés sont de type quadratique.

Brève description des figures

- La figure 1 représente schématiquement un réseau de neurones ayant une couche cachée ;
- les figures 2A et 2B représentent le diagramme fonctionnel du procédé de l'invention avec un apprentissage du neurone de sortie, conforme au premier mode de réalisation de l'étape B2) de l'invention ;
- les figures 3A et 3B représentent le diagramme fonctionnel du procédé de l'invention avec un apprentissage du neurone de sortie conforme au troisième mode de réalisation de l'invention.

Exposé de modes de réalisation de l'invention

L'invention propose un procédé d'apprentissage permettant d'apprendre à un réseau de neurones à classer des données en deux classes séparées par une surface non linéaire en utilisant des réseaux de neurones qui sont construits au fur et à mesure des besoins. Cette surface peut être soit quadratique, soit en partie linéaire et en partie quadratique.

Le réseau de neurones, selon l'invention, est construit à partir de perceptrons généralisés, c'est-à-dire de neurones de base, qui permettent de classer les données qu'ils reçoivent en entrées, selon deux classes.

Plus précisément, un perceptron est un neurone qui reçoit N signaux d'entrées, caractérisant l'objet ou la donnée à traiter, et qui calcule une fonction de ces entrées, par exemple une somme pondérée ou une fonction quadratique ou bien une fonction logarithmique et donne, comme signal de sortie, le signe de ladite fonction.

Suivant que les vecteurs représentatifs des données d'entrées (appelées indifféremment « entrées » ou « données d'entrée ») se trouvent d'un côté ou de l'autre de la surface de séparation, la sortie du perceptron est 1 ou -1. Un tel perceptron est appelé « classifieur linéaire » si la fonction des entrées est la somme pondérée des entrées ; il ne peut alors classer que des données séparables par un hyperplan de normale $\vec{w}$, c'est-à-dire par une surface séparatrice linéaire d'ordre 1.

D'une façon générale, un perceptron généralisé est un neurone ; un perceptron linéaire est un neurone qui produit des surfaces de séparation linéaires ; un perceptron quadratique est un neurone qui produit des surfaces de séparation qui sont des fonctions quadratiques des entrées du réseau. Qu'il s'agisse de neurones ou de perceptrons, chacun représente une unité binaire.

Le procédé de l'invention consiste donc, à partir d'un perceptron généralisé, à construire un réseau de neurones, de manière incrémentale, c'est-à-dire en augmentant le nombre de neurones nécessaires à la tâche que l'on souhaite faire effectuer à ce réseau de neurones.

De façon plus précise, le procédé de l'invention consiste à augmenter le nombre de neurones dans une couche intermédiaire, appelée « couche cachée », de manière à construire un réseau avec un nombre de neurones suffisant pour réaliser la tâche qui lui a été assignée, la classification de données.

Lorsque l'ensemble des données à classer est linéairement séparable, on peut utiliser un perceptron linéaire. Au contraire, lorsque l'ensemble des données à classer n'est pas linéairement séparable, on peut utiliser des réseaux de neurones ayant des couches de neurones intermédiaires, appelées « couches cachées », disposées entre les unités d'entrée et la sortie du réseau. Il est à noter, toutefois, que si le classement est purement séparable par une surface quadratique, un seul neurone suffit.

Cependant, le nombre exact de neurones nécessaires, constituant cette couche cachée, n'est, à priori, pas connu.

Le procédé de l'invention permet justement de construire un réseau avec au moins une couche de neurones cachés, au fur et à mesure des besoins, c'est-à-dire en augmentant le nombre des neurones constituant cette couche cachée, en fonction de l'ensemble de données à classer.

Dans ce cas, le nombre de neurones du réseau augmente pendant le processus d'apprentissage. L'architecture finale du réseau et la taille du réseau sont définies par l'algorithme d'apprentissage et sont fonction de l'ensemble des exemples utilisés.

Chaque neurone rajouté dans la couche cachée est donc un perceptron généralisé dont les poids doivent être appris, les poids de tous les autres neurones du réseau déjà construit restant gelés (c'est-à-dire sauvegardés en vue d'une utilisation ultérieure).

Le procédé de l'invention consiste à construire un réseau de neurones avec au moins une couche cachée connectée aux unités d'entrées du réseau et avec un seul neurone de sortie connecté aux neurones de la dernière couche cachée.

Dans la suite de la description, on considérera le cas d'un réseau ayant une seule couche cachée, sachant que le procédé pour construire plusieurs couches cachées reprend, pour chaque couche cachée, le procédé utilisé pour construire un réseau à une seule couche cachée.

Ainsi, au cours de l'apprentissage, le nombre de neurones de la couche cachée grandit, jusqu'à ce que le neurone de sortie du réseau classe correctement tout ou partie de l'ensemble d'apprentissage, c'est-à-dire des exemples de la base d'apprentissage. La quantité d'erreurs tolérables est déterminée par l'utilisateur. En fin d'apprentissage, les neurones de la couche cachée ont des poids $J_k = (J_{ko}, ... , J_{ki}, ... , J_{kn})$ avec $O \leq i \leq N$ et $1 \leq k \leq NH$, où NH est le nombre de neurones de la couche cachée et N est le nombre d'unités d'entrée du réseau ; et la sortie du réseau a des poids $W = (W_0, W_1,... , W_k, ... , W_{NH})$ avec $0 < k < NH$.

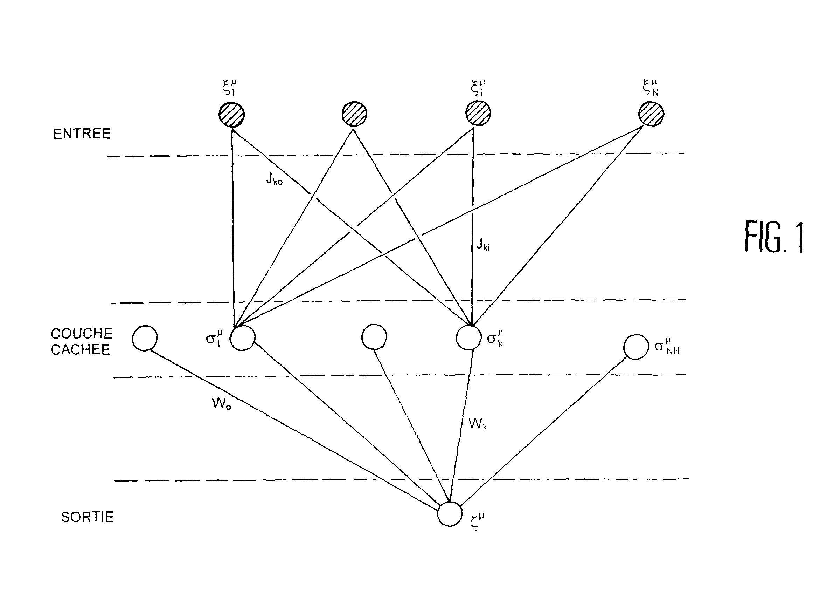

Sur la figure 1, on a représenté un exemple de réseau à une couche cachée.

Sur cette figure, on a représenté, par des petits ronds, différents neurones du réseau. Les ronds pleins représentent les unités d'entrée du réseau ; ils sont notés $\xi_i^\mu$, où $\mu$ est le numéro de l'exemple ; les neurones de la couche cachée sont notés $\sigma_k^\mu$, et leurs poids sont les vecteurs $J_k$ ; et le neurone de sortie est noté $\zeta^\mu$ avec des poids W. Si un exemple

$$\xi^\mu = \left( \xi_1^\mu, ... , \xi_1^\mu, ... , \xi_N^\mu \right)$$

se présente à l'unité d'entrée du réseau, les états $\sigma_k^\mu$ des différents neurones de la couche cachée et la sortie du réseau $\zeta^\mu$ sont donnés par les formules :

$$\sigma_K^\mu = \text{signe } f_k^s(J_k, \xi^\mu), \text{ avec } 1 \leq k \leq NH,$$

où $f_k^s$ représente la fonction que calcule le neurone k, $f^s$ pouvant être par exemple :

1)

$$f^1 = \sum_{i=0} J_{ki} \xi_i^\mu \quad :$$

une somme pondérée

2)

$$f^2 = \sum_{i=1}^{N} \left[ \left( J_{ki} - \xi_i^\mu \right)^2 - J_{ko}^2 \right] \quad :$$

une fonction quadratique

3)

$$f^3 = \ln\left[\sum_{i=1}^{N} \frac{\left(J_{ki} - \xi_i^2\right)^2}{J_{ko}^2}\right] \quad :$$

une fonction logarithmique et

$$\zeta^\mu = \text{signe}\left(\sum_{k=0}^{NH} W_k \sigma_k^\mu\right)$$

avec

$$\begin{cases} \sigma_0^\mu = +1 \\ \xi_{50}^\mu = +1 \end{cases}$$

pour tous les exemples et pour toutes les données à classer.

Autrement dit, pour des exemples $\xi^\mu$, le réseau utilisera une couche cachée constituée du neurone $\sigma_0^\mu$ et des neurones $\sigma_i^\mu$ à $\sigma_{NH}^\mu$, dont les poids sont $J_k$, k étant le numéro du neurone caché et qui sont connectés au neurone de sortie $\zeta^\mu$ dont les poids sont W. Les états $\sigma^\mu = (\sigma_0^\mu, \sigma_I^\mu,..., \sigma_{NH}^\mu)$ constituent, en fait, la représentation interne des exemples $\xi^\mu$ utilisée par les neurones de la couche cachée du réseau.

Le procédé selon l'invention consiste donc à définir une représentation interne pour chaque exemple et à apprendre la séparation des représentations internes par le neurone de sortie, en ajoutant, si besoin est, des neurones dans l'unique couche cachée.

Pour produire la couche cachée, le procédé de l'invention commence par apprendre les sorties que l'on souhaite obtenir à un perceptron généralisé. Si le problème n'est pas séparable, il y aura forcément des erreurs d'apprentissage. Dans ce cas, les poids du perceptron seront gelés et ce perceptron deviendra le premier neurone de la couche cachée. Dans un mode de réalisation particulier, un deuxième neurone caché sera alors ajouté, qui devra apprendre une nouvelle classification des exemples destinée à corriger les erreurs d'apprentissage du neurone précédent, par exemple, une sortie -1 pour exemples bien appris par le neurone précédent, et +1 pour les autres.

Tant qu'il reste des erreurs avec les exemples de la base d'apprentissage, le procédé peut être répété.

Une fois que les exemples de la base d'apprentissage ont été appris, le neurone de sortie est connecté au neurone de la couche cachée. Le neurone de sortie doit apprendre à séparer les représentations internes des exemples de la base d'apprentissage.

Si les représentations internes sont linéairement séparables, le procédé est terminé. Autrement, il faut augmenter la dimension de ces représentations internes, afin de les rendre séparables. Pour cela, on rajoute un neurone caché et on lui apprend les classements -1 pour les exemples correctement classés par le perceptron de sortie et +1 pour les autres, par exemple.

Eventuellement, si cela est nécessaire, on continue à rajouter des neurones dans la couche cachée jusqu'à ce que le neurone de sortie soit capable de séparer tous les exemples de la base d'apprentissage.

Un réseau de neurones à une seule couche cachée est ainsi construit.

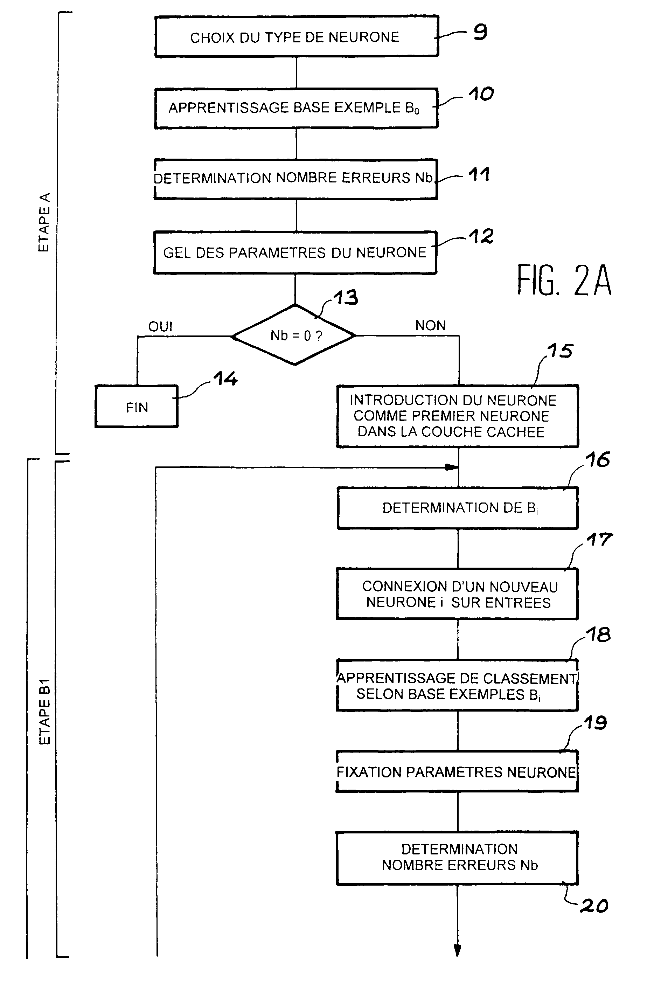

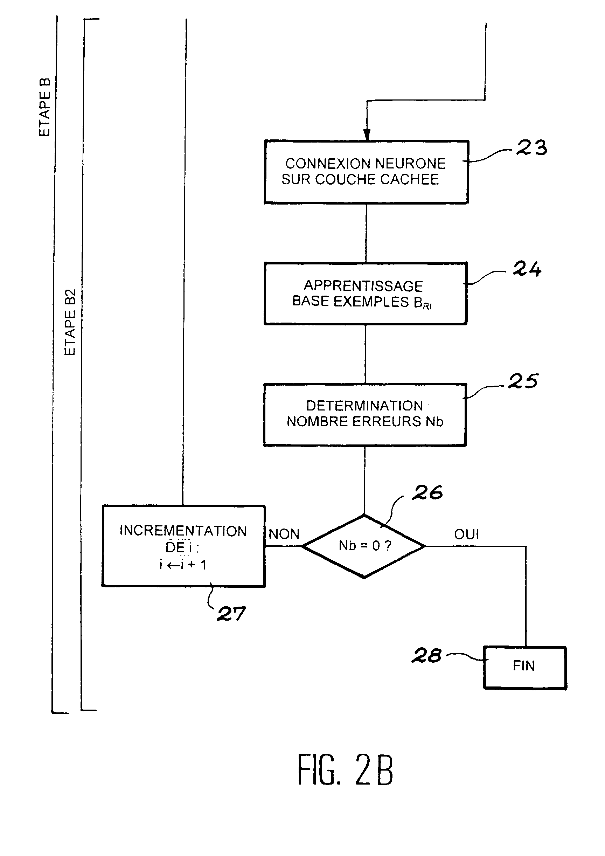

Les figures 2A et 2B représentent, par un schéma fonctionnel, le procédé décrit brièvement précédemment. La figure 2B représente, en particulier, le procédé de l'invention avec un premier mode d'apprentissage du neurone de sortie.

Le procédé selon l'invention comporte deux grandes étapes, à savoir une étape A) d'initialisation et une étape B) d'apprentissage des neurones de la couche cachée et de détermination du neurone de sortie.

L'étape A) d'initialisation consiste, tout d'abord, dans le choix d'un type de neurone (linéaire, quadratique, etc.), puis en l'apprentissage de la base d'apprentissage $B_0$, c'est-à-dire des entrées contenues dans cette base d'apprentissage $B_0$ avec leurs cibles associées afin de déterminer les paramètres descriptifs de la surface séparatrice relatifs à ce neurone.

La base d'exemples $B_0$ est constituée de données d'entrée (par exemple pour un diagnostic médical, ces données peuvent être la température, la tension artérielle, la profondeur de la tumeur, la taille de la cellule, etc.) et de cibles qui sont, pour chaque entrée la classe correspondante (par exemple, tumeur ou non tumeur, bénigne ou maligne, etc.).

Les représentations internes que les i neurones cachés attribuent aux entrées de la base d'exemples $B_0$, avec les cibles correspondantes, constituent la base des représentations internes $B_{RI}(i)$, c'est-à-dire la base d'apprentissage du neurone de sortie connecté à ces i neurones cachés.

L'état de l'ensemble des neurones cachés correspondant à chaque entrée de la base $B_0$ constitue la représentation interne de ladite donnée d'entrée.

On verra, par la suite, que le procédé de l'invention utilise des bases d'apprentissage successives $B_i$ ; ces bases d'apprentissage $B_i$ contiennent les mêmes exemples que la base $B_0$, mais avec des cibles différentes. La base $B_1$ est identique à la base $B_0$, c'est-à-dire que le premier neurone doit apprendre à classer la base avec les cibles originales.

Cette opération d'apprentissage de la base d'exemples $B_1$, référencée 10, est effectuée pour le premier neurone du réseau.

Lorsque cet apprentissage est effectué, une opération 11 de détermination du nombre d'erreurs d'apprentissage Nb est effectuée. Une opération 12 consiste ensuite à geler les paramètres du neurone de la surface séparatrice relatifs à ce neurone, c'est-à-dire descriptifs du type de surface et des poids $J_1$. Ensuite, une vérification du nombre Nb est faite en 13 :

. si le nombre d'erreurs d'apprentissage Nb est égal à 0, alors l'apprentissage est considéré comme terminé (bloc 14) ;

. si ce nombre d'erreurs Nb est non nul, alors le neurone est introduit comme premier neurone caché (i=1) dans une couche de neurones cachée (opération 15).

Une étape d'apprentissage B) est ensuite effectuée ; elle consiste en l'apprentissage des exemples par des neurones cachés situés dans la couche cachée et par le neurone de sortie.

Dans un premier mode de réalisation de l'invention, l'étape B) comporte une sous-étape Bl qui inclue elle-même une opération 16 de détermination de nouvelles cibles, dans laquelle i prend la valeur i+1, ce qui signifie qu'on détermine les cibles à apprendre au neurone suivant. Plus précisément, cette opération 16 consiste à déterminer de nouvelles cibles qui définissent la base d'exemples $B_i$, dans laquelle les exemples sont fonction des erreurs d'apprentissage du neurone précédent i-1.

Les nouvelles cibles (ou classes cachées) sont calculées en choisissant une convention dans laquelle : si l'exemple est bien appris par le neurone précédent, on lui attribue une classe cachée égale par exemple à +1. Si l'exemple est mal appris par le neurone précédent, on lui attribue une classe cachée opposée égale à -1, dans ce cas. Toutefois, cette convention n'est qu'un exemple ; on peut aussi choisir la convention opposée.

Selon l'invention, l'étape B1) comporte ensuite une opération 17, au cours de laquelle un nouveau neurone i, dont on a choisi le type, est connecté sur les unités d'entrées. Ce nouveau neurone i doit ensuite faire l'apprentissage de la base d'apprentissage $B_i$ contenant les mêmes entrées que la base d'apprentissage Bo, mais comportant des cibles correspondant à une autre classification, c'est-à-dire à la base d'exemples $B_i$ définie en 16. Cet apprentissage constitue l'opération 18 du procédé.

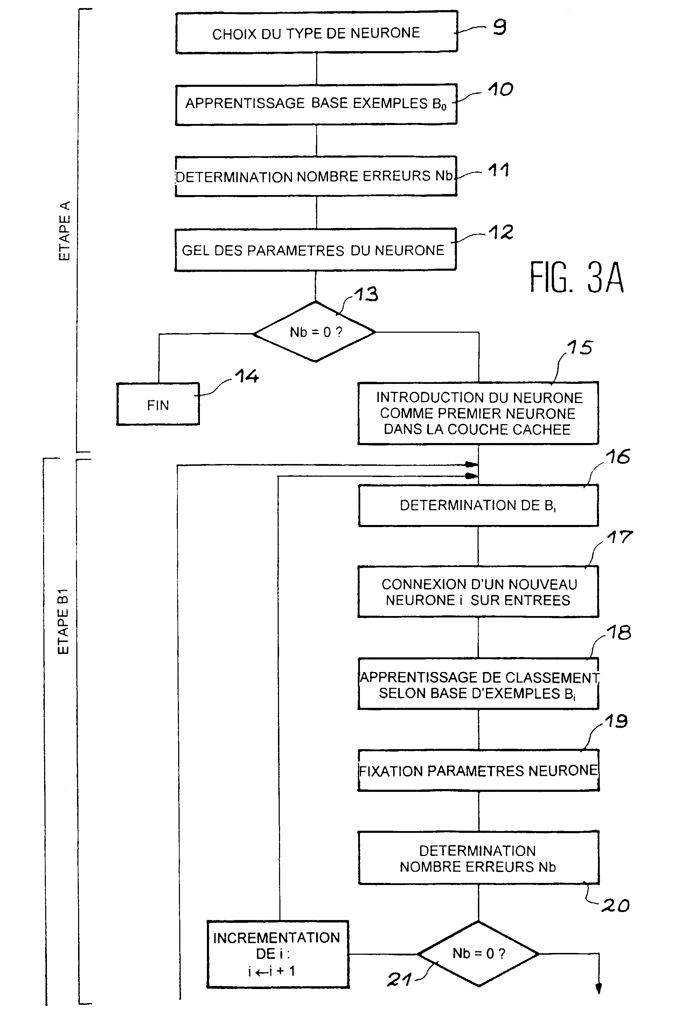

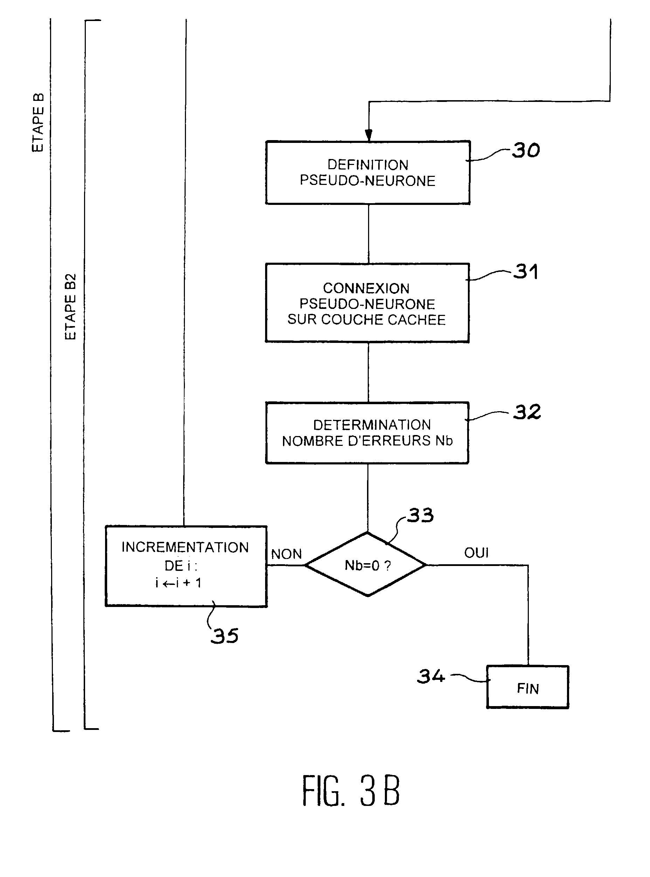

Ensuite, lorsque cet apprentissage est effectué, les paramètres de ce nouveau neurone sont figés dans une opération 19. Selon le mode de réalisation préféré de l'invention, le procédé passe alors directement à la sous-étape B2). Selon un mode de réalisation de l'invention, le procédé comporte une sous-étape B3), réalisée entre les étapes B1) et B2) ; c'est ce dernier mode de réalisation qui est représenté sur la figure 3. Cette sous-étape B3) comporte une opération 20 de détermination du nombre d'erreurs d'apprentissage Nb est effectuée. Une vérification de cette valeur Nb est ensuite faite en 21 :

. si ce nombre Nb est non nul, le procédé est réitéré après l'opération 15, c'est-à-dire au début de l'étape d'apprentissage du neurone caché ;

. si ce nombre Nb est nul, on continue en B2), une opération 23 est effectuée, qui consiste à connecter un neurone à tous les neurones de la couche cachée dont les paramètres sont figés. Il consiste ensuite en une opération 24 d'apprentissage, par ce neurone, de la base des représentations internes BRI constituée de façon à déterminer les paramètres de ce neurone.

Le procédé consiste ensuite à déterminer le nombre d'erreurs d'apprentissage Nb (opération 25). Une vérification de ce nombre Nb est faite en 26 :

. si Nb est nul, alors l'apprentissage du neurone de sortie est considéré terminé ; le dernier neurone devient le neurone de sortie du réseau, on gèle ses paramètres, et le procédé s'arrête (bloc 28) ;

. si ce nombre est non nul, le neurone de sortie est alors annihilé dans l'étape 27 et le procédé est recommencé à partir du début de l'opération 16 de rajout d'un nouveau neurone caché, en considérant comme erreur d'apprentissage du neurone précédent i-1, les erreurs du neurone que l'on vient d'annihiler.

Sur les figures 3A et 3B, on a représenté le procédé selon l'invention, dans lequel l'étape d'apprentissage du neurone de sortie est réalisée selon un troisième mode de réalisation.

Les étapes A) d'initialisation et B) d'apprentissage du neurone de sortie correspondant aux opérations 10 à 21 ne sont pas décrites à nouveau, puisqu'elles sont strictement identiques à celles de la figure 2A déjà décrite.

Le second mode de réalisation comporte une opération 30 qui consiste à définir un pseudo-neurone et une opération 31 qui consiste à connecter ce pseudo-neurone sur tous les neurones de la couche cachée, dont les paramètres sont figés. Ce pseudo-neurone a alors une sortie qui correspond sensiblement au produit des états des neurones cachés.

Le procédé se poursuit par une opération 32 consistant à vérifier si le classement de la base des représentations internes $B_{RI}$, par ce pseudo-neurone, est correct. Pour cela, on vérifie si le nombre Nb est nul (bloc 33). Si c'est le cas, l'apprentissage est terminé (bloc 34). Au contraire, si ce n'est pas le cas, le pseudo-neurone est annihilé (bloc 35) et le procédé est recommencé à partir du début de l'opération 16 de rajout d'un nouveau neurone caché en considérant, comme erreur d'apprentissage du neurone précédent i-1, les erreurs du pseudo-neurone qui vient d'être annihilé.

L'apprentissage de chaque perceptron au sein du réseau de neurones, c'est-à-dire toutes les opérations d'apprentissage, de la base d'exemples $B_0$ ou $B_i$ de la base d'exemples $B_{RI}$ (opérations 10, 18 et 23), sont effectuées, par exemple, au moyen d'un procédé d'apprentissage d'un neurone destiné à classer des données selon deux classes séparées par une surface séparatrice d'ordre 1 ou 2 ; un tel procédé est décrit dans la demande de brevet EP-A-0 785 943.

Il est à noter que, pour des raisons de simplicité, on a considéré, tout au long de la description, que les états des neurones binaires sont codés +1 ou -1. Toutefois, le procédé selon l'invention est applicable pour des états de neurones différents, par exemple, codés 0 ou 1, ou codés selon n'importe quel autre type de codage binaire.

De plus, il est à noter que la sortie du pseudo-neurone dans le mode de réalisation de la figure 3B, est le produit des états des neurones cachés ; toutefois, cette sortie peut ne pas être le produit des états de neurones cachés ; il peut être, par exemple, remplacé par des fonctions logiques de parité ou par un OU-exclusif.

Comme le comprendra l'homme de métier, l'invention peut s'appliquer à des réseaux plus complexes, comportant plusieurs couches de neurones cachés.

L'homme du métier comprendra aussi qu'un réseau de neurones tel que celui qui vient d'être décrit peut permettre de classer des objets en un nombre de classes supérieur à deux ; pour cela, le réseau est associé à plusieurs autres réseaux de même type, chacun permettant de séparer une classe de toutes les autres. Pour choisir la classe attribuée à l'objet à classer, on peut, par exemple, utiliser comme critère de choix, celle qui a la plus grande somme pondérée sur le neurone de sortie du réseau correspondant.

**Revendications**

**1.** Procédé pour apprendre, à partir d'une base d'exemples constituée de données d'entrée connues et de cibles correspondant à la classe de chacune de ces données d'entrée, à classer des objets en deux classes distinctes séparées par au moins une surface séparatrice de type quadratique ou de type quadratique et linéaire, consistant à générer un réseau de neurones de type binaire comportant chacun des paramètres descriptifs de la surface séparatrice qu'ils déterminent, ce réseau de neurones comportant des entrées de réseau ainsi qu'une couche de neurones cachés connectés à ces entrées et à un neurone de sortie du réseau, caractérisé en ce qu'il comporte :

    A) une étape d'initialisation consistant en :

    Aa) un choix (9) du type du premier neurone qu'on connecte aux entrées ;

    Ab) un apprentissage (10) de la base d'exemples ($B_0$) par ce premier neurone, afin de déterminer les paramètres descriptifs d'une première surface séparatrice, relatifs à ce neurone ;

    Ac) une détermination (9) du nombre d'erreurs d'apprentissage :

    Ad) si ce nombre d'erreurs est nul, l'apprentissage est terminé (14) et le premier neurone choisi en Aa) devient le neurone de sortie du réseau ;

    Ae) si ce nombre est non nul, les paramètres du premier neurone sont figés et ledit neurone devient le premier neurone (i = 1) d'une couche de neurones cachés (15) construite par :

    B) une étape de construction de la couche cachée et de détermination du neurone de sortie du réseau comprenant :

        B1) une adaptation de la couche de neurones cachés en fonction du classement à effectuer consistant à :

        B1a) déterminer (16) de nouvelles cibles pour la base d'exemples ($B_0$) en fonction des erreurs d'apprentissage du dernier neurone (i) appris, les entrées de la base d'exemples ($B_0$) complétées des nouvelles cibles constituant une nouvelle base d'exemples ($B_i$) ;

        B1b) incrémenter d'une unité le compteur de neurones cachés i, et connecter (17) un nouveau neurone caché, i, d'un type choisi, sur les entrées du réseau et apprendre (18) à classer la nouvelle base d'exemples ($B_i$) ;

        B1c) figer (19) les paramètres de ce nouveau neurone (i), les états des neurones cachés correspondant à chaque donnée d'entrée de la base d'exemples ($B_0$) constituant une représentation interne de cette donnée d'entrée ;

        B2) une validation de la couche de neurones cachés et une détermination du neurone de sortie du réseau.

**2.** Procédé selon la revendication 1, caractérisé en ce que les représentations internes des entrées de la base d'exemples constituent une base de représentations internes $B_{RI}(i)$ et en ce que l'étape B2), consiste à :

B2a) introduire un neurone de sortie de type linéaire, connecter (23) ce neurone de sortie aux neurones cachés, apprendre (24) à ce neurone de sortie la classification de la base de représentations internes B$_{RI}$(i) et déterminer (25) le nombre d'erreurs d'apprentissage du neurone de sortie :

B2b) si ce nombre est nul, considérer que le réseau est construit (28) et comporte une couche de (i) neurones cachés ;

B2c) si ce nombre est non nul, considérer les erreurs d'apprentissage du neurone de sortie comme des erreurs du neurone précédent dans l'étape B1a), annihiler (27) ce neurone de sortie et recommencer le traitement à partir de l'étape B1a) jusqu'à ce que le nombre d'erreurs du neurone de sortie soit nul.

**3.** Procédé selon l'une quelconque des revendications 1 ou 2, dans lequel les entrées du réseau sont binaires, caractérisé en ce qu'il comporte une étape intermédiaire B3), effectuée entre les étapes B1) et B2) et consistant à :

B3a) déterminer (20) le nombre d'erreurs d'apprentissage du neurone i :

B3b) si ce nombre est non nul, le traitement est réitéré à partir de l'étape B1) en considérant les erreurs de ce neurone comme des erreurs du neurone précédent pour créer la base d'apprentissage (Bi) ;

B3c) si ce nombre est nul, considérer la couche de neurones cachés, ainsi construite comme potentiellement acceptable, et effectuer l'étape B2).

**4.** Procédé selon la revendication 3, caractérisé en ce que les représentations internes des d'entrées de la base d'exemples constituent une base de représentations internes (B$_{RI}$(i)) et l'étape B2) consiste à :

B2d) introduire (30) un neurone de sortie appelé pseudo-neurone, connecter (31) ce pseudo-neurone à tous les neurones cachés dont les paramètres sont figés, calculer (32) la sortie de ce pseudo-neurone comme étant sensiblement le produit des états des neurones cachés ;

B2e) déterminer (33) si le pseudo-neurone effectue un classement correct de tous les exemples de la base de représentations internes (B$_{RI}$(i)) :

B2f) si c'est le cas, l'apprentissage est considéré comme terminé (34) et le réseau construit comporte une couche de (i) neurones cachés ;

B2g) si ce n'est pas le cas, considérer les erreurs de classification du pseudo-neurone de sortie comme des erreurs du neurone précédent dans l'étape B1a), annihiler (35) ce pseudo-neurone de sortie et recommencer le traitement à partir de l'étape B1a) jusqu'à ce que le nombre d'erreurs du pseudo-neurone de sortie soit nul.

**5.** Procédé selon l'une quelconque des revendications 1 à 4, caractérisé en ce que le premier neurone choisi à l'étape Aa) est un neurone de type linéaire, les autres neurones étant non linéaires.

**6.** Procédé selon l'une quelconque des revendications 1 à 4, caractérisé en ce que tous les neurones cachés sont de type quadratique.

**Patentansprüche**

**1.** Lernverfahren um auf der Grundlage einer Beispiele-Basis, gebildet durch bekannte Eingangsdaten und Ziele, die der Klasse jeder dieser Eingangsdaten entsprechen, Objekte in zwei verschiedene Klassen zu klassifizieren, die durch wenigstens eine Trennfläche des quadratischen Typs oder des quadratischen und linearen Typs getrennt sind, darin bestehend, ein Netz von Neuronen des binären Typs aufzubauen, von denen jedes beschreibende Parameter der Trennfläche umfasst, die sie festlegen, wobei dieses Neuronennetz Netzeingänge umfasst sowie eine Schicht versteckter Neuronen, verbunden mit diesen Eingängen und mit einem Ausgangsneuron des Netzes, **dadurch gekennzeichnet,** dass es umfasst:

A) einem Initialisierungsschritt, bestehend aus:

Aa) dem Wählen (9) des Typs des ersten Neurons, das man mit den Eingängen verbindet;

Ab) dem Lernen (10) der Beispiele-Basis (B$_0$) durch dieses erste Neuron, um die dieses Neuron betreffenden beschreibenden Parameter einer ersten Trennfläche zu ermitteln;

Ac) dem Ermitteln (11) der Anzahl der Lernfehler:

Ad) wenn diese Fehlerzahl null ist, ist das Lernen beendet (14) und das erste, in Aa) gewählte Neuron wird das Ausgangsneuron des Netzes;

Ae) wenn die Anzahl nicht null ist, sind die Parameter des ersten Neurons fest bzw. starr und das genannte Neuron wird das erste Neuron (i=1) einer Schicht versteckter Neuronen (15), gebildet durch:

B) einen Schritt zur Bildung der versteckten Schicht und zur Bestimmung des Ausgangsneurons des Netzes, umfassend:

B1) eine Anpassung der Schicht aus versteckten Neuronen in Abhängigkeit von der durchzuführenden Klassifizierung, darin bestehend:

B1a) neue Ziele für die Beispiele-Basis ($B_0$) zu bestimmen (16), in Abhängigkeit von den Lernfehlern des letzten gelernten Neurons (i), wobei die um neue Ziele vervollständigten Eingänge der Beispiele-Basis ($B_0$) eine neue Beispiele-Basis ($B_i$) bilden;

B1b) den Zähler der versteckten Neuronen i um eine Einheit zu inkrementieren und ein neues verstecktes Neuron, i, eines gewählten Typs, mit den Eingängen des Netzes zu verbinden und zu lernen bzw. zu leeren (18), die neue Beispiele-Basis ($B_i$) zu klassifizieren;

B1c) die Parameter dieses neuen Neurons (i) erstarren zu lassen (19), wobei die Zustände der versteckten Neuronen bei jeder Eingangsgröße der Beispiele-Basis ($B_0$) eine interne Darstellung dieser Eingangsgröße bildet;

B2) eine Validierung der Schicht aus versteckten Neuronen und eine Bestimmung des Ausgangsneurons des Netzes.

2. Verfahren nach Anspruch 1, dadurch gekennzeichnet, dass die internen Darstellungen der Eingänge der Beispiele-Basis eine Basis interner Darstellungen $B_{RI}(i)$ bilden und dass der Schritt B2) darin besteht:

B2a) ein Ausgangsneuron des linearen Typs einzuführen, dieses Ausgangsneuron mit den versteckten Neuronen zu verbinden (23), diesem Ausgangsneuron die Klassifizierung der Basis interner Darstellungen $B_{RI}(i)$ zu leeren (24) und die Anzahl der Lernfehler des Ausgangsneurons zu bestimmen (25) ;

B2b) anzunehmen dass, wenn diese Anzahl null ist, das Netz aufgebaut ist (28) und eine Schicht versteckter Neuronen (i) umfasst;

B2c) anzunehmen dass, wenn diese Anzahl nicht null ist, die Lernfehler des Ausgangsneurons als Fehler des vorhergehenden Neurons in Schritt Bla) zu betrachten, dieses Ausgangsneuron zu vernichten (27) und die Verarbeitung ab dem Schritt Bla) neu zu beginnen, bis die Fehlerzahl des Ausgangsneurons null ist.

3. Verfahren nach einem der Ansprüche 1 oder 2, bei dem die Eingänge des Netzes binär sind, dadurch gekennzeichnet, dass es einen Zwischenschritt B3) umfasst, ausgeführt zwischen den Schritten B1) und B2) und darin bestehend:

B3a) die Anzahl der Lernfehler des Neurons (i) zu bestimmen (20) :

B3b) wenn diese Anzahl nicht null ist, die Verarbeitung ab dem Schritt B1) zu wiederholen, indem man die Fehler dieses Neurons als Fehler des vorhergehenden Neurons betrachtet, um die Lernbasis ($B_i$) zu schaffen.

B3c) wenn diese Anzahl null ist, die so aufgebaute Schicht aus versteckten Neuronen als potentiell akzeptabel zu betrachten und den Schritt B2) auszuführen.

4. Verfahren nach Anspruch 3, dadurch gekennzeichnet, dass die internen Darstellungen der Eingänge der Beispiele-Basis eine Basis interner Beispiele ($B_{RI}(i)$) bilden und der Schritt B2) darin besteht:

B2d) ein Ausgangsneuron, Pseudo-Neuron genannt, einzuführen (30), dieses Pseudo-Neuron mit allen versteckten Neuronen zu verbinden (31), deren Parameter fest bzw. erstarrt sind, den Ausgang dieses Pseudo-Neurons zu berechnen (32) als im wesentlichen das Produkt der Zustände der versteckten Neuronen bildend;

B2e) feststellen (33) ob das Pseudo-Neuron eine richtig Klassifizierung aller Beispiele der Basis interner Darstellungen ($B_{RI}(i)$) ausführt:

B2f) dass, wenn dies der Fall ist, der Lernprozess als beendet betrachtet wird (34) und das aufgebaute Netz eine Schicht versteckter Neurone (i) umfasst;

B2g) dass, wenn dies nicht der Fall ist, man die Klassifizierungsfehler des Ausgangs-Pseudo-Neurons als Fehler des vorhergehenden Neurons in Schritt Bla) betrachtet, dieses Ausgangs-Pseudo-Neuron vernichtet (35) und die Verarbeitung ab dem Schritt B1a) neu beginnt, bis die Anzahl der Ausgangs-Pseudo-Neuronen null ist.

5. Verfahren nach einem der Ansprüche 1 bis 4, dadurch gekennzeichnet, dass das erste, im Schritt Aa) gewählte Neuron ein Neuron des linearen Typs ist, wobei die anderen Neuronen nichtlinear sind.

6. Verfahren nach einem der Ansprüche 1 bis 4, dadurch gekennzeichnet, dass alle versteckten Neuronen vom quadratischen Typ sind.

**Claims**

1. Process for learning from an examples base composed of known input data and targets corresponding to the class of each of these input data, to sort objects into two distinct classes separated by at least one quadratic type or quadratic and linear type separating surface, this process consisting of generating a network of binary type neurons, each comprising parameters describing the separating surface that they determine, this neural network comprising network inputs and a layer of hidden neurons connected to these inputs and to a network output neuron characterized in that it comprises:

   A) An initialization step consisting of:

   Aa) making a choice (9) of the type of the first neuron that is connected to inputs;
   Ab) learning (10) the examples base ($B_0$) by this first neuron, in order to determine the descriptive parameters for a first separating surface, for this neuron;
   Ac) determining (9) the number of learning errors,
   Ad) if this number of errors is zero, learning is finished (14) and the first neuron chosen in Aa) becomes the network output neuron;
   Ae) if this number is not zero, the parameters on the first neuron are fixed and the second neuron becomes the first neuron (i = 1) in a layer of hidden neurons (15) built by:

   B) a step in which the hidden layer is built and the network output neuron is determined, consisting of:

   B1) adaptation of the layer of hidden neurons as a function of the sorting to be done, consisting of:

   B1a) determining (16) new targets for the examples base ($B_0$) as a function of learning errors by the last neuron (i) learned, the inputs in the examples base ($B_0$) being used with new targets forming a new examples base ($B_i$) ;
   B1b) incrementing the hidden neuron counter i by one unit, and connecting (17) a new hidden neuron i of a chosen type on the network inputs, and learning (18) to sort the new examples base ($B_i$) ;
   B1c) fixing (19) the parameters of this new neuron (i), the states of the hidden neurons corresponding to each input data in the examples base ($B_0$) forming

   an internal representation of this input data;

   B2) validating the layer of hidden neurons and determining the network output neuron.

2. Process according to claim 1, characterized in that internal representations of inputs in the examples base form an internal representations base $B_{RI}(i)$ and in that step B2) consists of:

   B2a) introducing a linear type output neuron, connecting (23) this output neuron to the hidden neurons, teaching (24) this output neuron the sort of the internal representations base $B_{RI}$ (i) and determining (25) the number of learning errors in the output neuron:
   B2b) if this number is zero, considering that the network is built up (28) and includes a layer of i hidden neurons;
   B2c) if this number is not zero, considering that the output neuron learning errors are errors from the previous neuron in step Bla), eliminating (27) this output neuron and restarting the processing from step Bla) until the number of errors in the output neuron is zero.

3. Process according to claim 1 or 2, in which the network inputs are binary, characterized in that it comprises an intermediate step B3) carried out between steps B1) and B2) and consisting of:

   B3a) determining (20) the number of neuron i learning errors;
   B3b) if this number is not zero, the processing is repeated starting from step B1) assuming that the errors for this neuron are errors from the previous neuron in creating the learning base ($B_i$) ;
   B3c) if this number is zero, consider the layer of hidden neurons built in this way as being potentially acceptable and carry out step B2).

4. Process according to claim 3, characterized in that the internal representations of inputs in the examples base form an internal representations base ($B_{RI}(i)$) and in that step B2) consists of:

   B2d) introducing (30) an output neuron called a pseudo-neuron, connecting (31) this pseudo-neuron to all hidden neurons for which the parameters are fixed, calculating (32) the output from this pseudo-neuron as being approximately the product of the states of the hidden neuron;
   B2e) determining (33) if the pseudo-neuron correctly sorts all examples in the internal representations base ($B_{RI}$(i));

B2f) if it does, learning is considered to be finished (34) and the created network comprises a layer of (i) hidden neurons;

B2g) if not, considering that the output pseudo-neuron sorting errors are errors from the previous neuron in step B1a), eliminating (35) this output pseudo-neuron and restarting the processing at step B1a) until the number of output pseudo-neuron errors is zero.

5. Process according to any one of claims 1 to 4, characterized in that the first neuron chosen in step Aa) is a linear type neuron, the other neurons being non-linear.

6. Process according to any one of claims 1 to 4, characterized in that all hidden neurons are of the quadratic type.

EP 0 875 032 B1

ENTREE

COUCHE CACHEE

SORTIE

$\xi^{\mu}_1$

$\xi^{\mu}_i$

$\xi^{\mu}_N$

$J_{ko}$

$J_{ki}$

$\sigma^{\mu}_1$

$\sigma^{\mu}_k$

$\sigma^{\mu}_{NH}$

$W_o$

$W_k$

$\zeta^{\mu}$

# FIG. 1

CHOIX DU TYPE DE NEURONE — *9*

APPRENTISSAGE BASE EXEMPLE $B_0$ — *10*

DETERMINATION NOMBRE ERREURS Nb — *11*

GEL DES PARAMETRES DU NEURONE — *12*

ETAPE A

FIG. 2A

*13*

OUI — Nb = 0 ? — NON

FIN — *14*

INTRODUCTION DU NEURONE COMME PREMIER NEURONE DANS LA COUCHE CACHEE — *15*

DETERMINATION DE $B_i$ — *16*

CONNEXION D'UN NOUVEAU NEURONE i SUR ENTREES — *17*

APPRENTISSAGE DE CLASSEMENT SELON BASE EXEMPLES $B_i$ — *18*

FIXATION PARAMETRES NEURONE — *19*

DETERMINATION NOMBRE ERREURS Nb — *20*

ETAPE B1

FIG. 2B

FIG. 3A

ETAPE A

- CHOIX DU TYPE DE NEURONE — 9
- APPRENTISSAGE BASE EXEMPLES $B_0$ — 10
- DETERMINATION NOMBRE ERREURS Nb — 11
- GEL DES PARAMETRES DU NEURONE — 12
- Nb = 0 ? — 13
- FIN — 14
- INTRODUCTION DU NEURONE COMME PREMIER NEURONE DANS LA COUCHE CACHEE — 15

ETAPE B1

- DETERMINATION DE $B_i$ — 16
- CONNEXION D'UN NOUVEAU NEURONE i SUR ENTREES — 17
- APPRENTISSAGE DE CLASSEMENT SELON BASE D'EXEMPLES $B_i$ — 18
- FIXATION PARAMETRES NEURONE — 19
- DETERMINATION NOMBRE ERREURS Nb — 20
- INCREMENTATION DE i : i ← i + 1
- Nb = 0 ? — 21

ETAPE B

ETAPE B2

DEFINITION
PSEUDO-NEURONE — 30

CONNEXION
PSEUDO-NEURONE
SUR COUCHE CACHEE — 31

DETERMINATION
NOMBRE D'ERREURS Nb — 32

INCREMENTATION
DE i :
$i \leftarrow i + 1$
35

NON

33

Nb=0 ?

OUI

34 — FIN

FIG. 3 B